**Europäisches Patentamt**

**European Patent Office**

**Office européen des brevets**

(11) Veröffentlichungsnummer: **0 164 444**
**B1**

(12) **EUROPÄISCHE PATENTSCHRIFT**

(45) Veröffentlichungstag der Patentschrift:
04.10.89

(51) Int. Cl.⁴: **G 01 B 17/00**

(21) Anmeldenummer: **84115191.3**

(22) Anmeldetag: **12.12.84**

(54) **Verfahren zur Auswertung von Ultraschall-Echosignalen.**

(30) Priorität: **16.03.84 DE 3409767**

(43) Veröffentlichungstag der Anmeldung:
**18.12.85 Patentblatt 85/51**

(45) Bekanntmachung des Hinweises auf die Patenterteilung:
**04.10.89 Patentblatt 89/40**

(84) Benannte Vertragsstaaten:
**DE**

(56) Entgegenhaltungen:
**DE-A-2 734 683**
**DE-A-2 938 969**
**DE-A-3 138 723**
**DE-A-3 138 964**
**DE-A-3 138 965**

(73) Patentinhaber: **Siemens Aktiengesellschaft,
Wittelsbacherplatz 2, D-8000 München 2 (DE)**

(72) Erfinder: **Kleinschmidt, Peter, Dipl.- Phys.,
Klagenfurter Strasse 12, D-8000 München 80 (DE)**
Erfinder: **Magori, Valentin, Dipl.- Phys.,
Limburgstrasse 17, D-8000 München 90 (DE)**

EP 0 164 444 B1

## Beschreibung

Die vorliegende Erfindung bezieht sich auf ein Verfahren nach dem Oberbegriff des Patentanspruches 1.

Aus dem Stand der Technik (DE-OS-2 938 969, 3 138 723, 3 138 964, 3 138 965) sind variierte Verfahren zur Auswertung von Ultraschall-Echosignalen zur Detektion eines Einbrechers bekannt. Es wird dort eine Echoprofilspeicherung der auf den empfangenen Ultraschall-Echosignalen beruhenden elektrischen Signale durchgeführt. Die fortlaufend empfangenen Echosignale eines jeweiligen Ultraschall-Sendeimpulses werden dazu in zeitlich serieller Folge abgespeichert und es werden die korrespondierenden Speicherergebnisse der zu aufeinanderfolgenden Sendeimpulsen abgespeicherten Echosignale miteinander verglichen. Dadurch, daß jeweils eine Differenzbildung durchgeführt wird, werden die Empfangssignale eliminiert, die auf Ultraschallechos ruhender Objekte beruhen. Die Echosignale eines sich im betreffenden zu überwachenden Raum bewegenden Eindringlings werden dagegen registriert, weil sich fortlaufend unterschiedliche, diesem sich bewegenden Objekt entsprechende, jeweils zu speichernde Echoprofile ergeben und diese einzelnen Speicherungen bei der Differenzbildung sich nicht aufheben können.

Bei diesen bekannten Verfahren erfolgt die Auswertung der Hüllkurve der aufgrund der Ultraschall-Echosignale erhaltenen elektrischen Empfangssignale. Insbesondere kann für die Abspeicherung eine zuvor erfolgende Digitalisierung des Signals der Hüllkurve vorgesehen sein, so daß die entsprechenden Digitalwerte der Hüllkurve auf den einzelnen Speicherplätzen in serieller Folge abgespeichert sind.

In der nicht vorveröffentlichten älteren Patentanmeldung P-3 335 421 .9 v. 29.9.83 (Offenlegung 18.4.85) ist ein Ultraschall-Ortungsverfahren beschrieben, bei dem nach dem Prinzip der Echoprofilspeicherung ein von einem sich bewegenden Roboterarm zu erfassendes, ruhendes Objekt lokalisiert wird. Es wird dort wieder die serielle Folge der auf Echos eines jeweiligen Ultraschall-Sendeimpulses beruhenden Empfangssignale gespeichert, wobei ebenfalls die Hüllkurve der Empfangssignale in digitale Werte umgesetzt wird. Die einzelnen seriellen Speicherfolgen der Werte der digitalisierten Empfangssignal-Hüllkurven, d.h. die digitalisierten Echoprofile der jeweiligen Ultraschall-Sendeimpulse werden miteinander verglichen. Im Gegensatz zum oben beschriebenen Stand der Technik werden hier jedoch die jeweiligen Echoprofile der betreffenden Ultraschall-Sendeimpulse zeitlich gegeneinander verschoben, wobei für das Maß der Verschiebung diejenige Relativgeschwindigkeit des Anbringungsortes des Ultraschallwandlers am Roboterarm herangezogen wird, die in der Richtung vorliegt, in der jeweils im Augenblick eine Objekterfassung durchgeführt werden soll.

Beim Verfahren dieser älteren Anmeldung ist Integration, d.h. Addition der einzelnen gespeicherten Echoprofile durchzuführen, womit eine Anhebung des Echosignals aus dem Rauschen erreicht wird. Auch diesbezüglich liegt ein wesentlicher Unterschied gegenüber dem Verfahren des eingangs beschriebenen Standes der Technik vor.

Im Rahmen der Arbeiten, die zur vorliegenden Erfindung geführt haben, wurde erkannt, daß mit den Verfahren des Standes der Technik und der genannten älteren Anmeldung einwandfreie Objekterfassung solange durchgeführt werden kann wie größere Abstände zwischen Ultraschallwandler und zu erfassendem Objekt vorliegen, d.h. solange die Erfassungsweite eine gewisse Mindestgröße hat. Den beschriebenen Verfahren ist eine gewisse Weitsichtigkeit immanent, d.h. in größerer Nähe wird die Objekterkennung dann ungenau.

Es ist Aufgabe der vorliegenden Erfindung, Verbesserungen zu den bekannten Verfahren zu finden, mit denen die diesen Verfahren immanente Weitsichtigkeit behoben werden kann, d.h. solche Verbesserungen anzugeben, mit denen auch auf kürzere Entfernung hohe Genauigkeit der Detektionsempfindlichkeit erzielt ist.

Diese Aufgabe wird mit einem Verfahren gelöst, das die Merkmale des Patentanspruchs 1 aufweist. Weitere Ausgestaltungen und Weiterbildungen der Erfindung gehen aus den abhängigen Ansprüchen hervor.

Der Erfindung liegt die Erkenntnis zugrunde, daß für die Ultraschall-Ortung in Luft eine alleinige Verbesserung hinsichtlich der eingesetzten Elektronik nicht ausreichend ist, diese oben erwähnte Weitsichtigkeit wirksam beheben zu können. Vielmehr bedarf es in Verbindung mit bestimmten Maßnahmen hinsichtlich der elektronischen Auswertung der Empfangssignale auch einer wie im Anspruch angegebenen Maßnahme, die sich auf den Ultraschall-Sendewandler, und zwar für den Sendebetrieb in Luft, bezieht.

Mit der Erfindung läßt sich dann eine exakte Objekterfassung bzw. Entfernungsdetektion auch unterhalb einer Objektentfernung vom 200-fachen der Ultraschall-Wellenlänge $\lambda$ in Luft erzielen.

Weitere Erläuterungen der Erfindung gehen aus der nachfolgenden, anhand der Figuren gegebenen Detailbeschreibung hervor.

Die Figuren 1 bis 3 zeigen Diagramme zur Signalform, zur Digitalisierung und zur Integration.

Figur 4 zeigt eine Greiferanordnung und

Figur 5 und 6 betreffen einen wichtigen Anwendungsfall.

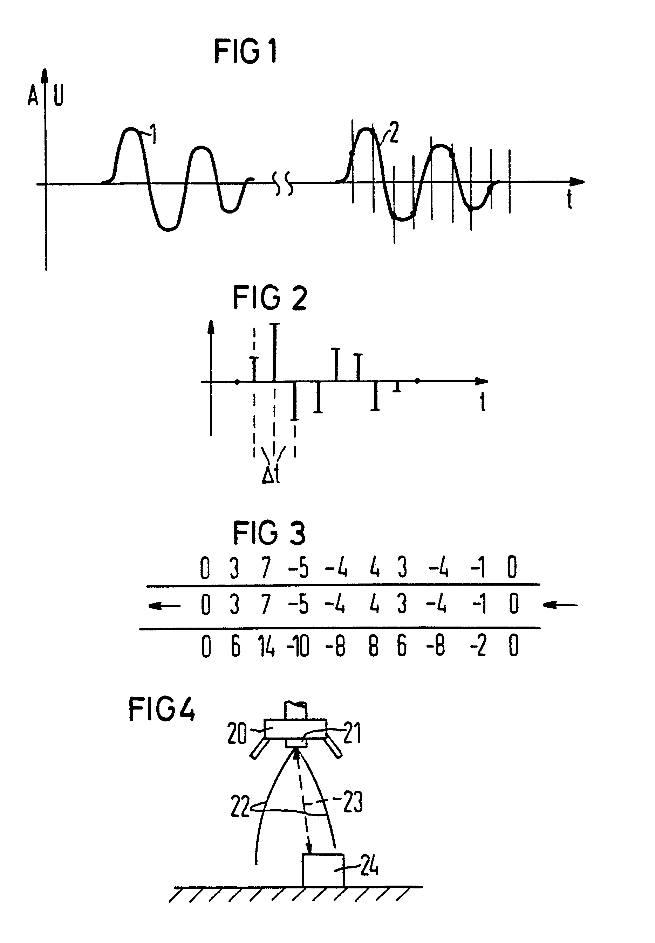

Figur 1 zeigt das Schaubild eines Sendeimpulses und eines Echo-Empfangsimpulses mit der Zeit t als Abszisse und auf der Ordinate aufgetragener Schwingungsamplitude für das Senden und aufgetragener elektrischer Spannung U für den Empfang. Wie ersichtlich besteht der akustische Sendeimpuls aus einem sehr kurzen Wellenzug mit einer gewissen Periodizität der Nulldurchgänge und abfallender Amplitude. Der Gesamtimpuls ist nur wenige Periodendauern lang, d.h. der Ultraschall-Sendeimpuls ist zeitlich äußerst kurz. Eine solche für die Erfindung wichtige Sendeimpulsform erhält man durch die vorgesehene Verwendung eines breitbandigen Ultraschallwandlers, der für dieses Aussenden mit jeweils einem jeweils zeitlich kurzen Impuls angeregt wird. Der das Aussenden bewirkende Ultraschallwandler wird also im wesentlichen nur angestoßen und schwingt stark gedämpft aus. Der Wandler hat somit eine so große Bandbreite, die einen solchen Ultraschallimpuls auszusenden gestattet. Mit 2 ist ein nach einer Zeitdauer $(t - t_o)$ zu empfangendes Echosignal wiedergegeben, das im wesentlichen der Impulsform des Sendeimpulses 1 entspricht. Für den Empfang kann vorteilhafterweise z. B. derselbe Ultraschallwandler verwendet werden, der für das Aussenden benutzt wurde. Auch der Empfangswandler hat die große Bandbreite, die den Empfang des mit 2 dargestellten Analogsignals ermöglicht. Wie in Figur 1 angedeutet, wird in zeitlichen Abständen $\Delta$ t voneinander ein Abtasten der momentanen Werte des Empfangsimpulses 2 vorgenommen. Die in Figur 2 dargestellten, abgetasteten Analogwerte werden digitalisiert und abgespeichert. Dies erfolgt für (auf einem jeweiligen Sendeimpuls beruhende) jegliche Empfangsimpulse, die qualitativ dem mit 2 bezeichneten Empfangsimpuls entsprechen und entsprechend der jeweiligen Ultraschallaufzeit vom Sendewandler bis zum Empfangswandler (beide Wandler können ein und derselbe Wandler sein) zu entsprechend verschiedenen Zeiten t empfangen werden.

Die Abtastung erfolgt mit dem Abtasttheorem entsprechend bemessenen zeitlichen Abständen $\Delta$ t. Im seriellen Speicher sind digitalisiert die den Analogwerten der Abtastung gemäß Figur 2 entsprechenden Werte in digitaler Form auf zugeordneten Speicherplätzen abzuspeichern, wie dies Figur 3 zeigt. Je kürzer der ausgesandte Ultraschall-Wellenimpuls 1 ist, um so kürzer ist der auf einem Echo an einem Objekt beruhende Empfangs Wellenzug 2. Verändert sich jedoch der Ort des aussendenden Wandlers, der z. B. am Roboterarm befestigt ist, gegenüber dem ruhenden Objekt, das z. B. das zu erkennende und später zu ergreifende Werkstück ist, so verschieben sich die für den jeweiligen Sendeimpuls (der Aufeinanderfolge von Sendeimpulsen) empfangenen Signalwerte nach Figur 2 bzw. Figur 3 - bezogen auf den jeweiligen Sendezeitpunkt - zeitlich zueinander. Dies ist in der obengenannten älteren Anmeldung ins Einzelne gehend bereits beschrieben. In Figur 3 ist dementsprechend in der zweiten Zeile die Folge der einzelnen Signalwerte der betreffenden Abtastung des Empfangs-Wellenzugs 2 des Echos von demselben Objekt jedoch für den folgenden Sendeimpuls angegeben. Dabei ist in der Darstellung der Figur 3 bereits die der Relativbewegung des Sendewandlers entsprechende Zeitverschiebung der Achse enthalten. Die wie beim Verfahren der älteren Anmeldung vorgenommene Integration ist in der dritten Zeile der Figur 3 angegeben.

Es sei hier nochmals hervorgehoben, daß bei der vorliegenden Erfindung die Empfangssignal-Auswertung mit Abtastung, Speicherung und Integration auf das jeweilige, nur wenige Wellenzüge andauernde Echosignal bezogen worden ist. Wegen der kurzen Zeitdauer des jeweiligen Wellenzuges eines empfangenen Echosignals 2, d.h. der direkten Auswertung der Empfangssignalschwingung (und nicht der Hüllkurve eines zeitlich entsprechend längeren Empfangssignals) läßt sich mit der vorliegenden Erfindung eine für industrielle Automation sehr gute Ortsauflösung erreichen. Dabei beruht - dies sei nochmals hervorgehoben - die Kürze des Empfangssignals auf der entsprechenden Kürze des Sendesignals und dessen Kürze wiederum auf der Verwendung eines wie anspruchsgemäß ausgewählten Ultraschallwandlers für das Aussenden. Diese gute Ortsauflösung auch im Nahbereich unter dem 200-fachen der Ultraschallwellenlänge ist auch bei Ultraschallaussendung in Luft erreichbar, nämlich in dem Ausbreitungsmedium, das für die industrielle Automation, z. B. für den Roboterbetrieb als eine zwingende Voraussetzung zu berücksichtigen ist. Der Betrieb in Luft stellt nämlich ganz besondere Anforderungen, die bei Ultraschallortung innerhalb des Wassers oder eines hinsichtlich der Schallgeschwindigkeit bzw. des akustischen Wellenwiderstandes vergleichbaren Mediums wie Körpergewebe nicht auftreten. Ein wie bei der Erfindung zu verwendender, anspruchsgemäß charakterisierter Ultraschallwandler verbürgt eine hohe Effektivität der Schallübertragung in das Medium Luft.

Ein für die vorliegende Erfindung zu verwendender Luftultraschallwandler mit großer Bandbreite und mit trotzdem günstigem Ultraschall-Übertragungsmaß zwischen Wandler und Luft ist in den parallelen Patentanmeldungen VPA 84 P 1211 und 84 P 1220 vom gleichen Tage beschrieben.

Im Zusammenhang mit der Darstellung der Figur 3 wurde die Integration aufeinanderfolgender Empfangs-Echoimpulse behandelt. Eine solche der Erfindung gemäße Variante ist vorzugsweise für die industrielle Automation und insbesondere für die Steuerung eines Roboterarms, an dem sich der betreffende Ultraschallwandler als Sensor befindet, zu empfehlen. Die Auswertung der integrierten, aus dem Rauschen hervorgehobenen Empfangssignale läßt sich für sensorgesteuerten Betrieb des Roboters verwenden.

Statt der Integration nach Figur 3 kann auch eine Differenzbildung der einzelnen digitalisierten Abtastwerte des jeweiligen Echosignal-Wellenzuges 2 zeitlich aufeinanderfolgender Sendeimpulse erfolgen, nämlich nach dem Prinzip des eingangs beschriebenen Standes der Technik für Raumschutzgeräte, wo jedoch die Empfangsignal-Hüllkurve ausgewertet wurde. Ein solches nach der Lehre der hier vorliegenden Erfindung modifiziertes Gerät kann dann dazu verwendet werden, auch auf kurze Entfernung zwischen bewegten und (nicht interessierenden) unbewegten Objekten, d.h. unbewegtem Hintergrund zu unterscheiden. Ein solcher Anwendungsfall ist z. B. die Überwachung des Transports von Teilen auf Förderbändern, wobei das Förderband selbst mangels besonderer Konturen als ruhendes Objekt erscheint.

Für den erfindungsgemäßen Luft-Ultraschallbetrieb eigenen sich besonders gut Ultraschallfrequenzen im Bereich von 30 bis 500 KHz, insbesondere um 100 KHz. Die entsprechende Luftwellenlänge $\lambda$ beträgt dann einige mm, d.h. für 100 KHz ist der Wert 200 x $\lambda$ = 60 cm. Ein Entfernungsbereich unter z. B. 60 cm ist aber der wichtige Bereich für die industrielle Automation, z. B. für die von einem Ultraschall-Sensorgerät gesteuerte Führung eines Roboterarms.

Figur 4 zeigt eine Prinzipdarstellung zur Anwendung der Erfindung zur Sensorsteuerung des Greifers 20 eines Roboterarms. Mit 21 ist der erfindungsgemäß zu verwendende, breitbandige, mit Impuls-Stoßanregung zur Aussendung eines kurzen Wellenzuges 1 zu betreibende Wandler bezeichnet. Der Wandler 21 ist vorzugsweise auch Empfangswandler. Mit 22 ist auf die Sendekeule der Ultraschall-Ausstrahlung hingewiesen und mit 23 ist die zu der Relativgeschwindigkeit der Bewegung des Greifers 20, bezogen auf das Objekt 24, gehörende Richtung angedeutet. Bei dieser Relativgeschwindigkeit entsprechender Verschiebung der vor ihrer Summation miteinander jeweils abzuspeichernden Empfangssignale (Zeilen 1 und 2 in Figur 3) ist maximale Signalanhebung (gemäß der obengenannten älteren Patentanmeldung) zu erreichen. Mit 24 ist ein Werkstück bezeichnet.

Die Erfindung ist auch vorteilhaft dazu zu verwenden, einen Vergleich zwischen einer Ist-Situation und der Soll-Situation, und zwar insbesondere für den Bereich nächster Nähe, durchzuführen. Es wird dabei der Unterschied, d.h. die Differenz der gespeicherten Werte einer momentanen Empfangssignalauswertung genüber den gespeicherten Werten eines aufgenommenen Sollbildes festgestellt. Bei einer Differenz 0 stimmen Ist-Situation und Soll-Situation überein. Auf diese Weise kann vom Sensor (der z. B. am Roboterarm angebracht ist) festgestellt werden, ob das richtige Werkstück vorliegt und/oder sich am richtigen Ort und/oder in richtiger Lage befindet. Hierbei ist die Beherrschung geringster Distanzen von besonderer Bedeutung, da es insbesondere für die Beurteilung der Lage des Werkstücks auf die Unterscheidung der Konturen des jeweiligen Werkstückes ankommt. In entsprechender Variation der Auswertung kann nach diesem Prinzip auch eine qualitative Unterscheidung verschiedener Werkstücke erfolgen, nämlich indem die Ist-Situation mit einem Katalog der (Soll-)Bilder in Frage kommender Werkstücke verglichen wird. Sind in einem solchen Katalog als Sollbilder unterschiedliche Ansichten eines betreffenden Werkstückes gespeichert, so kann nach dem voranstehenden Prinzip die (oben schon erwähnte) Lageerkennung hinsichtlich des jeweiligen Werkstücks durchgeführt werden. Wegen der mit der Erfindung möglichen Erfassung kürzester Distanzen kann außer einer qualitativen auch eine quantitative Erfassung von Distanzabweichungen durchgeführt werden. Die betreffende Distanzabweichung kann aus der für das Erreichen der Deckung durchzuführenden gegenseitigen Verschiebung der jeweiligen seriellen Folgen der gespeicherten Empfangssignale ermittelt werden (siehe Fig. 3 bzw. die Beschreibung der obengenannten älteren Anmeldung).

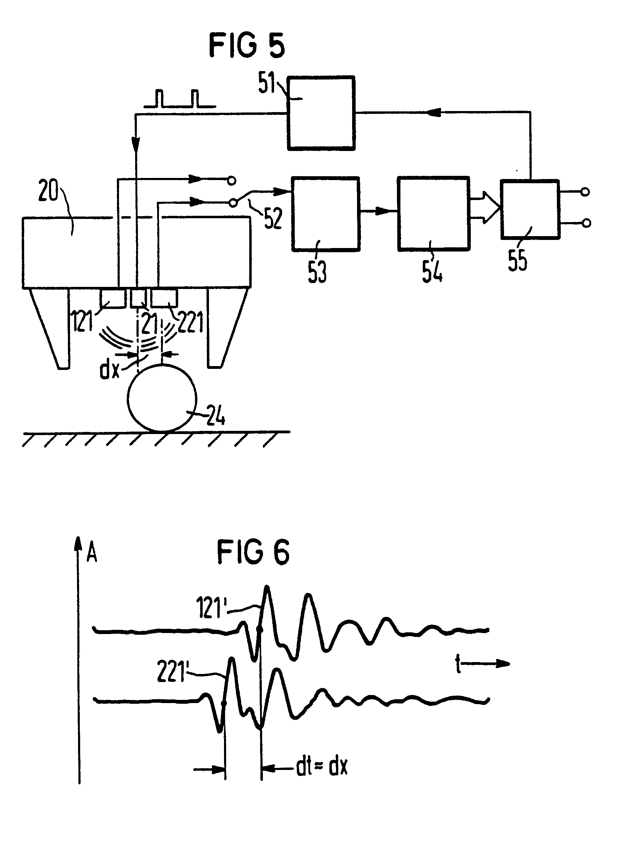

Weitere Erläuterungen zum Voranstehenden gehen auch aus den Figuren 5 und 6 hervor. An Wandler 20 sind ein Ultraschall-Sendewandler 21 und symmetrisch dazu (in einem Abstand von z. B. 20 mm voneinander) zwei Empfangswandler 121 und 221 angebracht. Die Schallfront des Sendewandlers 21 trifft auf das Werkstück 24 und von den Empfangswandlern 121 und 221 wird jeweils ein Echosignal empfangen. Das Aussenden erfolgt aufgrund einer Impulsanregung aus dem Sender 51 und die Empfangssignale der Empfangswandler 121 und 221 gehen beispielsweise über einen Umschalter 52 auf einen Empfänger 53. Mit dem Analog-Digital-Wandler 54 erfolgt die Digitalisierung der Empfangssignale, die in dem Auswertegerät 55 gespeichert und verglichen werden.

Aufgrund der dargestellten unsymmetrischen Lage des Werkstücks 24 bezogen auf den Greifer 20 erfolgt der Empfang des jeweiligen Echosignals in den Wandlern 121 und 221 etwas zeitverschoben gegeneinander. Figur 6 zeigt die beiden Empfangssignale 121' und 221' der Empfangswandler 121 und 221. Dem der unsymmetrischen Lage des Werkstücks entsprechenden Entfernungsunterschied gemäß sind die Empfangssignale 121' um das Maß dt etwa zeitverschoben gegeneinander. Aus diesem Maß dt ergibt sich das Maß dx für den Distanzunterschied, d.h. für die unsymmetrische (unrichtige und noch zu korrigierende) Lage von Werkstück 24 und Greifer 20 zueinander.

Auch im vorliegenden Falle liegt die Bedeutung der Erfindung darin, daß nicht die Hüllkurve des Empfangssignals, sondern der Schwingungsverlauf des Empfangssignals unmittelbar ausgewertet wird. Da die Empfangssignale 121', 221' auf der Aussendung ein und desselben Sendewandlers 21 beruhen, ist auch die Form der jeweiligen Wellenzüge der Empfangssignale 121', 221' praktisch identisch, so daß ein nahezu beliebig kleines Zeitintervall dt erfaßt werden kann, das sogar um ein Vieles kürzer als der Wellenzug des ausgesandten Ultraschallsignals bzw. der Empfangssignale selbst sein kann.

## Patentansprüche

1. Verfahren zur Auswertung von Echosignalen in einer Anordnung, in der mit Ultraschall-Sende- und -Echosignalen eine Ortung von Objekten vorgenommen wird, wobei diese Anordnung einen Sender, einen Empfänger, einen Analog-Digitalwandler und einen Speicher besitzt, und wobei die aus jeweils mehreren Sende- und Empfangsvorgängen erhaltenen und gespeicherten Signalwerte ausgewertet werden,

gekennzeichnet dadurch,

daß für Nahbereichsdetektion in Luft in einem Entfernungsbereich unterhalb etwa dem 200-fachen der Ultraschallwellenlänge

- ein oder mehrere Ultraschallwandler (21, 121, 221) verwendet werden, deren Brandbereite so bemessen ist, daß sie einen nur wenige Periodendauern langen, abklingenden Wellenzug (1; 2) übertragen,
- daß der Sendewandler (21) mit jeweils einem Impuls (1) mit kurzer Zeitdauer gespeist wird,
- daß die Amplitude des Empfangswellenzuges derart häufige abgetastet und in ein Digitalsignal umgewandelt wird, daß in diesen digitalen Signalen die Form des empfangenen Wellenzuges (2) erfaßt ist.

2. Verfahren nach Anspruch 1, gekennzeichnet dadurch, daß der Nahdetektionsbereich auf 100 · λ bemessen wird.

3. Verfahren nach Anspruch 1 oder 2, gekennzeichnet dadurch,

daß bei der Auswertung zur Detektion bewegter Objekte Differenzbildung der Ultraschall-Echoempfangssignale (2) aufeinander folgender Sendevorgänge erfolgt.

4. Verfahren nach einem der Ansprüche 1 oder 2,

gekennzeichnet dadurch,

daß bei der Auswertung eine Integration von aufgrund aufeinanderfolgender Sendvorgänge empfangenen Ultraschall-Echoempfangssignalen (2) erfolgt, wobei die Signale entsprechend der jeweiligen Relativgeschwindigkeit zwischen dem Ultraschallwandler dem Objekt zeitlich verschoben werden.

5. Anwendung eines Verfahrens nach einem der Ansprüche 1 bis 4 für industrielle Automation.

6. Anwendung eines Verfahrens nach einem der Ansprüche 1 bis 4 für die Steuerung der Bewegung eines mit Ultraschallwandler (21, 121, 221) als Sensor ausgerüsteten Roboterarms (20).

7. Anwendung eines Verfahrens nach einem der Ansprüche 1 bis 4 für Identifizierung und/oder Lageerkennung eines Werkstücks (24) in bezug auf einen Roboterarm (20), der mit einem Ultraschallwandler (21) als Sensor ausgerüstet ist.

## Claims

1. Process for the evaluation of echo signals in an arrangement in which a locating of objects is carried out with ultrasonic transmission and echo signals, this arrangement having a transmitter, a receiver, an analog/digital converter and a memory, and the signal values obtained in each case from a plurality of transmitting and receiving operations and stored being evaluated, characterized in that, for close-range detection in air in a distance range below approximately 200 times the ultrasonic wavelength,

- one or more ultrasonic-transducers (21, 121, 221) are used, the bandwidth of which is dimensioned such that they transmit a decayed wave train (1; 2) only a few periods of oscillation long,
- that the transmitting transducer (21) is fed with, in each case, one pulse (1) of short duration
- that the amplitude of the receiving wave train is so frequently sampled and converted into a digital signal that the shape of the received wave train (2) is registered in these digital signals.

2. Process according to Claim 1, characterized in that, the close detection range is dimensioned to 100.

3. Process according to Claim 1 or 2, characterized in that, in the evaluation for the detection of moving objects, a subtraction of the ultrasonic echo receiving signals (2) of successive transmitting operations is performed.

4. Process according to one of Claims 1 or 2, characterized in that, in the evaluation, an integration of ultrasonic echo receiving signals (2), received due to successive transmitting operations, is performed, the signals being shifted in time corresponding to the respective relative speed between the ultrasonic transducer and the object.

5. Use of a process according to one of Claims 1 to 4 for industrial automation.

6. Use of a process according to one of Claims 1 to 4 for controlling the movement of a robot arm (20) equipped with ultrasonic transducer (21, 121, 221) as sensor.

7. Use of a process according to one of Claims 1 to 4 for identification and/or position detection of a workpiece (24) with respect to a robot arm (20), which is equipped with an ultrasonic transducer (21) as sensor.

## Revendications

1. Procédé pour évaluer des signaux d'échos dans un dispositif, dans lequel une localisation d'objets est réalisée à l'aide de signaux d'émission ultrasonores et de signaux d'échos ultrasonores, ce dispositif comportant un émetteur, un récepteur, un convertisseur analogique/numérique et une mémoire, et selon lequel on évalue les valeurs des signaux obtenues à partir de plusieurs opérations respectives d'émission et de réception et mémorisées, caractérisé par le fait

- que, pour la détection dans une zone de proximité dans l'air, dans une plage de distances inférieure à environ 200 fois la longueur d'onde des ultrasons

- on utilise un ou plusieurs transducteurs ultrasonores (21, 121, 221), dont la largeur de bande est dimensionnée de telle sorte qu'ils transmettent un train d'ondes décroissant (1; 2), dont la durée est égale seulement à quelques périodes,

que le transducteur d'émission (21) est alimenté chaque fois avec une impulsion (1) de brève durée,

- que l'amplitude du train d'ondes de réception est échantillonnée avec une fréquence telle, et est convertie en un signal numérique, que la forme du train d'ondes reçu (2) est détectée dans ces signaux numériques.

2. Procédé suivant les revendications 1, caractérisé par le fait que la zone de détection de proximité est réglée à une dimension égale à 100 λ.

3. Procédé suivant la revendication 1 ou 2, caractérisé par le fait que, lors de l'évaluation réalisée pour la détection d'objets mobiles, on forme la différence entre les signaux de réception d'échos ultrasonores (2) obtenus à partir d'opérations d'émission successives.

4. Procédé suivant l'une des revendications 1 ou 2, caractérisé par le fait que, lors de l'évaluation, on réalise une intégration de signaux de réception d'échos ultrasonores (2) reçus à partir d'opérations successives d'émission, les signaux étant décalés dans le temps respectivement en fonction de la vitesse relative entre le transducteur ultrasonore et l'objet.

5. Application d'un procédé suivant l'une des revendications 1 à 4 pour une automation industrielle.

6. Application d'un procédé suivant l'une des revendications 1 à 4 pour la commande du déplacement du bras (20) d'un robot, équipé d'un transducteur ultrasonore (21, 121, 221) formant capteur.

7. Application d'un procédé suivant l'une des revendications 1 à 4, pour l'identification et/ou le repérage de la position d'une pièce à usiner (24) par rapport à un bras (20) d'un robot, qui est pourvu d'un transducteur ultrasonore (21) formant capteur.

## FIG 1

## FIG 2

## FIG 3

| 0 | 3 | 7 | -5 | -4 | 4 | 3 | -4 | -1 | 0 |
|---|---|---|----|----|---|---|----|----|---|
| ← | 0 | 3 | 7 | -5 | -4 | 4 | 3 | -4 | -1 | 0 | ← |
| 0 | 6 | 14 | -10 | -8 | 8 | 6 | -8 | -2 | 0 |

## FIG 4

# FIG 5

# FIG 6